# EUROPÄISCHE PATENTSCHRIFT

(11) **EP 2 272 647 B1**
(45) Veröffentlichungstag und Bekanntmachung des Hinweises auf die Patenterteilung: **31.08.2011**
(21) Anmeldenummer: 09009072.1
(22) Anmeldetag: 10.07.2009
(51) Int. Cl.: B29C 44/34, B29C 47/88, B29C 47/92, B29C 44/20, B29C 44/26

(54) **Verfahren zur Herstellung einer ein- oder mehrschichtigen expandierbaren Folie**
Method of producing a single or multiple layer expandable film
Procédé de fabrication d'une feuille extensible à monocouche ou multicouche

(43) Veröffentlichungstag der Anmeldung: 12.01.2011
(73) Patentinhaber: Nordenia Technologies GmbH, 48599 Gronau (DE)
(72) Erfinder: Perick, Matthias, 48683 Ahaus-Altstätte (DE); Boccuto, Domenico, 48703 Stadtlohn (DE)
(74) Vertreter: Albrecht, Rainer Harald

(56) Entgegenhaltungen:
- EP-A1- 1 543 938
- WO-A1-00/69747
- WO-A1-2008/054061
- JP-A- 7 195 477
- JP-A- 2000 141 448
- US-E1- R E37 932
- BALDWIN D F ET AL: "AN EXTRUSION SYSTEM FOR THE PROCESSING OF MICROCELLULAR POLYMER SHEETS: SHAPING AND CELL GROWTH CONTROL" CABIOS COMPUTER APPLICATIONS IN THE BIOSCIENCES, IRL PRESS,OXFORD, GB, Bd. 36, Nr. 10, 1. Mai 1996 (1996-05-01), Seiten 1425-1435, XP000637008 ISSN: 0266-7061

## Beschreibung

Die Erfindung betrifft ein Verfahren zur Herstellung einer ein- oder mehrschichtigen expandierbaren Folie, deren Foliendicke durch Energiezufuhr lokal oder flächig veränderbar ist.

Die Folie enthält eine expandierbare Substanz, die sich im Falle einer Erwärmung der Substanz ausdehnt. Die Ausdehnung kann auf einer chemischen Reaktion beruhen, bei der ein Gas entsteht. Bei der Substanz, die im Falle einer Erwärmung eine Ausdrehung der Folie bewirkt, kann es sich auch um ein Gas handeln, das in eine formbare Polymermatrix eingebracht worden ist, wobei das Gasvolumen temperatur- und druckabhängig ist.

Aus EP 1 289 643 B1 sind thermisch expandierbare Mikrokügelchen bekannt, die eine Hülle aus einem thermoplastischen Polymer und ein darin eingeschlossenes Treibmittel aufweist. Das Treibmittel weist einen derartigen Siedepunkt oder Siedebereich auf, dass eine Temperatur von über 50° C notwendig wäre, um mehr als die Hälfte des Treibmittels bei Atmosphärendruck zu verdampfen. Die Erweichungstemperatur der Polymerhülle liegt im Bereich zwischen 80° und 200° C. Unter Atmosphärendruck setzt eine merkliche Expansion der Mikrokügelchen ein, wenn die Temperatur eine Starttemperatur von etwa 80° C überschreitet, wobei die Mikrokügelchen bis zu einer Temperatur zwischen 200° und 300° C als expandierbare Substanz eingesetzt werden kann. Oberhalb einer maximal zulässigen Temperatur entweicht das Gas und fallen die Mikrokügelchen zusammen.

Aus EP 1 185 466 B1 ist eine zur Verwendung in Verpackungsmaschinen geeignete Polymerfolie bekannt, die mit einer expandierbaren Substanz beschichtet ist oder eine expandierbare Substanz enthält. Die expandierbare Substanz besteht aus Mikrokügelchen, die eine Hülle aus einem Copolymer aus Acrylnitril oder Vinylidenchlorid aufweisen und einen gasförmigen Kohlenwasserstoff enthalten. Die auf die Folie aufgebrachte oder in der Folie eingeschlossene expandierbare Substanz ist durch Energiezufuhr aktivierbar. Durch Einbringen von Wärme kann die Foliendicke der Folie lokal oder flächig verändert werden.

Wenn die expandierbare Substanz in das die Folie bildende Material vor dessen Extrusion eingebracht und zusammen mit der Polymerschmelze extrudiert wird, besteht das Problem, dass die Polymerschmelze spätestens beim Austritt aus der Extrusionsdüse beginnt aufzuschäumen, da die expandierbare Substanz am Austritt der Extrusionsdüse bei Atmosphärendruck einer hohen Temperatur ausgesetzt ist. Eine Kühlung des austretenden Schmelzefilms durch Luft oder Aufsprühen von Wasser reicht nicht aus, um die am Austritt der Extrusionsdüse einsetzende Ausdehnung der expandierbaren Substanz wirksam zu unterdrücken. Dies hat zur Folge, dass die expandierbare Substanz einen wesentlichen Teil ihres Expansionspotentials verliert, bevor der Schmelzefilm durch Abkühlung der Polymerschmelze formstabil ist, d. h. die Dicke des Schmelzefilms nicht weiter zunimmt.

JP407195477A zeigt ein Verfahren zur Herstellung expandierbaren Folien wobei dieses Problem teilweise mittels Kühlwalzen beseitigt wird.

JP2000141448A und XP637008A "AN EXTRUSION SYSTEM FOR THE PROCESSING OF MICROCELLULAR POLYMER SHEETS: SHAPING AND CELL GROWTH CONTROL", BALDWIN D F; PARK C B; SUH N P, CABIOS COMPUTER APPLICATIONS IN THE BIOSCIENCES, 19960501, IRL PRESS,OXFORD, GB zeigen Extrusionsverfahren von expandierten Folien, wobei die Folien unter Gegendruck mittels Glättbänder gekühlt und abgezogen werden.

Vor diesem Hintergrund liegt der Erfindung die Aufgabe zugrunde, das Verfahren zur Herstellung einer ein- oder mehrschichtigen expandierbaren Folie so zu führen, dass das Ausdehnungsvermögen der in die Folie eingearbeiteten expandierbaren Substanz nicht wesentlich beeinträchtigt wird.

Gegenstand der Erfindung und Lösung dieser Aufgabe ist ein Verfahren nach Anspruch 1 zur Herstellung einer ein- oder mehrschichtigen expandierbaren Folie, deren Foliendicke durch Energiezufuhr lokal oder flächig veränderbar ist. Erfindungsgemäß wird durch Extrusion unter hohem Druck aus einer Polymerschmelze, die eine in der Polymerschmelze unter Atmosphärendruck expandierende Substanz enthält, ein Schmelzefilm erzeugt, der aus einer Breit-schlitzdüse in eine unter Atmosphärendruck stehende Umgebung austritt. Zur Begrenzung einer am Austritt der Breitschlitzdüse in Folge einer Druckabsenkung einsetzenden Expansion der expandierenden Substanz wird der Schmelzefilm in einen Spalt zwischen zwei Oberflächen eingebracht und dort durch Kontaktkühlung an mindestens einer Oberfläche gekühlt. Dabei setzen die am Spalt begrenzenden Oberflächen einer Expansion der Substanz einen Gegendruck entgegen und halten diesen auf beiden Seiten des Schmelzefilms solange aufrecht, bis der Schmelzefilm durch Abkühlung der Polymerschmelze formstabil ist. "Formstabil" meint, dass die Dicke des Schmelzefilms sich nicht mehr ändert. Es versteht sich, dass die Folie biegsam und flexibel sein kann. Bei dem erfindungsgemäßen Verfahren wird der Schmelzefilm unmittelbar nach dem Austreten aus der Breitschlitzdüse durch Kontaktkühlung rasch, d. h. mit einer hohen Kühlgeschwindigkeit abgekühlt. Gleichzeitig, d. h. während des Kühlprozesses, wird der Schmelzefilm auf beiden Seiten mit Oberflächen in Kontakt gebracht, welche eine Ausdehnung des Schmelzefilms in Dickenrichtung begrenzen.

Der Schmelzefilm wird innerhalb des Spaltes auf eine Temperatur abgekühlt, die unterhalb einer die Expansion der expandierbaren Substanz auslösenden Starttemperatur liegt.

Gemäß dem Verfahren wird der aus der Breitschlitzdüse austretende Schmelzefilm in einen Spalt zwischen einer rotierenden Kühlwalze und einem am Umfang der Kühlwalze angeordneten Glättband eingebracht und an einer gekühlten Mantelfläche der Kühlwalze gekühlt. Gemäss einer bevorzugten Ausführung, wird das Glättband über Umlenkrollen geführt und zweckmäßig von einem Antneb dergestalt angetrieben, dass es am Umfang der Kühlwalze gleichsinnig zu dieser mit einer der Umfangsgeschwindigkeit der Kühlwalze im Wesentlichen entsprechenden Geschwindigkeit umläuft. Als Glättband wird vorzugsweise ein Metallband verwendet, welches sich durch eine große Zugfestigkeit und hohes Wärmeleitvermögen auszeichnet.

Gemäß einer bevorzugten Ausführung des erfindungsgemäßen Verfahrens wird der Schmelzefilm durch Einstellung einer Abzugsgeschwindigkeit, die größer ist als die Austrittsgeschwindigkeit des Schmelzefilms am Austritt der Breitschlitzdüse gedehnt wird und dadurch dessen Dicke reduziert. Die Abzugsgeschwindigkeit kann durch eine Steuerung der Drehzahl der Kühlwalze verändert werden.

Beim Austritt des Schmelzefilms aus der Breitschlitzdüse überlagem sich verschiedene Effekte. Durch eine Druckabsenkung am Austritt der Breitschlitzdüse und durch Relaxation der orientierten Polymerketten des Schmelzefilms kommt es am Austritt der Breitschlitzdüse zu einer Strangaufweitung. Gleichzeitig setzt eine Expansion der im Schmelzefilm enthaltenen expandierbaren Substanz ein. Durch Einstellung einer Abzugsgeschwindigkeit, die größer ist als die Austrittsgeschwindigkeit des Schmelzfilms am Austritt der Breitschlitzdüse, wird der Schmelzefilm gedehnt und hierdurch in seiner Dicke reduziert. Dabei wird der Schmelzefilm in den Spalt zwischen der Kühlwalze und dem umfangsseitig angeordneten Glättband eingeführt. Der Abstand zwischen Glättband und Kühlwalze wird so eingestellt, dass die am Ende des Spaltes abgezogene, abgekühlte Folie die gewünschte Dicke aufweist Der Spaltabstand zwischen der Kühlwalze und dem Glättband ist in Umfangsrichtung der Kühlwalze nicht konstant, sondern verringert sich von der Eintrittsseite in Abzugsrichtung des Schmelzefilms. Die Enddicke der fertigten Folie entspricht im Wesentlichen dem minimalen Spaltabstand zwischen der Kühlwalze und dem Glättband unter Berücksichtigung des Gegendruckes der expandierenden Polymerschmelze.

Die Verwendung einer aus einer Kühlwalze und einem umfangsseitigen Glättband bestehenden Anordnung stellt die Ausführung des erfindungsgemäßen Verfahren dar.

Um eine möglichst große Abkühlgeschwindigkeit zu realisieren, kann der aus der Breitschlitzdüse austretende Schmelzefilm am Austritt der Breitschlitzdüse zusätzlich durch Kontakt mit einer Kühlflüssigkeit oder einem Kühlluftstrom gekühlt werden. Die Kühlflüssigkeit kann beispielsweise als Wassemebel aufgesprüht werden. Zur Erzeugung eines Kühlluftstromes kann ein Luftrakel verwendet werden.

Die expandierbare Substanz besteht vorzugsweise aus Polymerkügelchen, die ein Treibgas enthalten und bei einer Temperatur oberhalb von 80° C bis 190° C unter Atmosphärendruck expandieren. Die expandierbare Substanz wird den polymeren Ausgangsmaterialien, aus denen die Folie bzw. die expandierbare Folienschicht gefertigt wird, zugemischt und als Mischungskomponente zusammen mit diesen extrudiert. Die expandierbare Substanz kann in für die Folienherstellung gebräuchliche Standardpolymere wie Polyolefine, Polyamide, Polyester oder thermoplastische Elastomere eingebracht werden. Wenn Polymerkügelchen, die ein Treibgas enthalten, als expandierbare Substanz verwendet werden, ist es im Hinblick auf die späteren Anwendungseigenschaften der Folie von Vorteil, wenn die Polymerkügelchen in Polymere eine-arbeitet werden, die einen Schmelzindex von mehr als 1 g/10min bei der üblichen Verarbeitungstemperatur, d. h. Extrusionstemperatur, aufweisen. Bevorzugt sind Polymere mit einem Schmelzeindex von 2 bis 20 g/10min (gemessen bei 190° C/2,16 kg). Gut geeignet sind beispielsweise Polyethylene (PE-LD) mit einem Schmelzeindex von ca. 8 g/10min bei 190° C/2,16 kg.

Nach dem erfindungsgemäßen Verfahren können Monofolien hergestellt werden, die durch eine thermische Aktivierung flächig oder lokal aufgeschäumt werden können. Die zur thermischen Aktivierung notwenige Energie kann durch eine ganzflächige Erhitzung der Folie oder durch lokale Laserbestrahlung, mit Siegelwerkzeugen, Thermoformwerkzeugen und dergleichen eingebracht werden.

Nach dem erfindungsgemäßen Verfahren können ferner mehrschichtige Coextrusionsfolien hergestellt werden, die eine Schicht mit einer expanierbaren Substanz enthalten. Bei der Herstellung einer mehrschichtigen Folie tritt aus der Breitschlitzdüse ein mehrschichtiger, durch Coextrusion erzeugter Schmelzefilm aus, wobei eine Schicht des Schmelzefilms aus einer die expandierende Substanz enthaltenden Polymerschmelze gebildet wird. Die expandierfähige Schicht kann eine Außenschicht oder im Falle eines mindestens dreischichtigen Schmelzefilms auch eine mittlere Schicht des Schmelzefilms sein. Übliche Additive wie Farbpigmente, Gleitmittel, Antiblockadditive, Verarbeitungshilfsmittel und Füllstoffe können in der Schicht, weiche die expandierende Substanz enthält und/oder in angrenzenden Schichten eingesetzt werden. Sofern die expandierfähige Schicht als Kemschicht oder als unterseitige Schicht einer mehrschichtigen Folie vorliegt, dürfen die abdeckenden Schichten nicht zu steif sein, damit ein nachträgliches Aufschäumen der Folie durch thermische Aktivierung nicht behindert wird.

Nach dem erfindungsgemäßen Verfahren werden vorzugsweise Folien hergestellt, deren expandierfähige Schicht vor einer Aktivierung der Folie durch Energiezufuhr eine Dicke zwischen 10 µm und 500 µm, insbesondere eine Dicke zwischen 30 µm und 400 µm, aufweist Auf einer oder beiden Seiten der expandierfähigen Schicht eines aus der Breitschlitzdüse austretenden Schmelzefilms kann eine nichtexpandierende Polymerschicht mit einer Schichtdicke von 5 µm bis 200 µm, insbesondere mit einer Schichtdicke von 20 bi 80 µm, vorgesehen sein.

Im Folgenden wird die Erfindung anhand von Ausführungsbeispielen erläutert. Es zeigen schematisch
- **Fig.1**: ein Verfahren zur Herstellung einer expandierbaren Folie, deren Foliendicke durch Energiezufuhr lokal oder flächig ver- änderbar ist,
- **Fig. 2**: den Schichtenaufbau einer nach den in Fig. 1 dargestellten Verfahren hergestellten mehrschichtigen Folie,
- **Fig. 3a und 3b**: die Schichtenstruktur der in Fig. 2 dargestellten Folie nach einer flächigen oder lokalen thermischen Aktivierung,
- **Fig. 4**: den Schichtenaufbau einer Dekorfolie mit Schaumrücken, die nach dem in Fig. 1 dargestellten Verfahren herstellbar ist,
- **Fig. 5**: den Schichtenaufbau einer Dekorfolie zur Verwendung auf unregelmäßigen Substraten, die ebenfalls nach dem in Fig. 1 dargestellten Verfahren herstellbar ist.

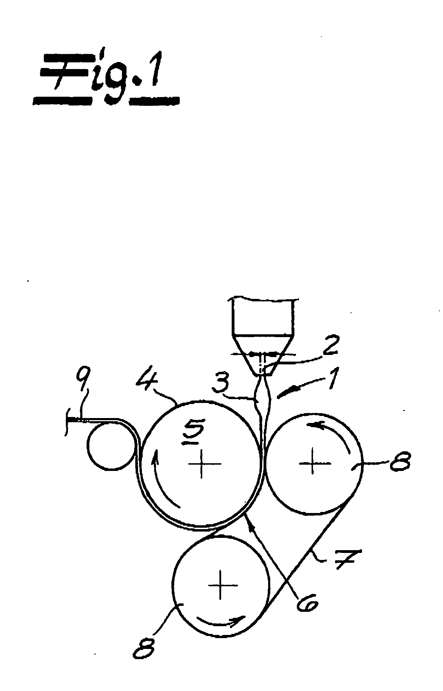

Das in Fig. 1 schematisch dargestellte Verfahren dient zur Herstellung einer expandierbaren Folie, deren Foliendicke durch Energiezufuhr lokal oder flächig veränderbar ist. Die Folie kann ein- oder mehrschichtig ausgebildet sein. Gemäß der Darstellung in Fig. 1 wird durch Extrusion unter hohem Druck aus einer Polymerschmelze, die eine in der Polymerschmelze unter Atmosphärendruck expandierende Substanz enthält, ein Schmelzefilm 1 erzeugt, der aus einer Breitschlitzdüse 2 in eine unter Atmosphärendruck stehende Umgebung austritt. Infolge eines Druckabfalls von dem im Extruder herrschenden Druck auf Atmosphärendruck bildet sich unmittelbar hinter der Breitschlitzdüse 2 eine Verdickung 3 im Schmelzefilm. Gleichzeitig setzt aufgrund des Druckabfalls eine Expansion der in der Polymerschmelze enthaltenden expandierenden Substanz ein, die ebenfalls zur Ausbildung der Verdickung 3 im Schmelzefilm beiträgt. Zur Begrenzung dieser am Austritt der Breitschlitzdüse 2 infolge einer Druckabsenkung einsetzenden Expansion der expandierenden Substanz wird der Schmelzefilm 1 unmittelbar nach seinem Austritt aus der Breitschlitzdüse 2 auf eine gekühlte Mantelfläche 4 einer rotierenden Kühlwalze 5 aufgebracht und mit der Bewegung der Kühlwalze in einen Spalt 6 zwischen der Kühlwalze 5 und einem am Umfang der Kühlwalze angeordneten Glättband 7 eingebracht. Als Glättband 7 wird ein Metallband verwendet, welches über Umlenkrollen 8 geführt und von einem Antrieb so angetrieben wird, dass es am Umfang der Kühlwalze 5 gleichsinnig zu dieser mit einer der Umfangsgeschwindigkeit der Kühlwalze 5 im Wesentlichen entsprechenden Geschwindigkeit umläuft. Die den Spalt 6 begrenzenden Oberflächen der Kühlwalze 5 und des Glättbandes 7 setzen einer Expansion der expandierenden Substanz einen Gegendruck entgegen und hatten diesen auf beiden Seiten des Schmelzefilms 1 solange aufrecht, bis der Schmelzefilm durch Abkühlung der Polymerschmelze formstabil ist. Der Schmelzefilm 1 wird innerhalb des Spaltes 6 auf eine Temperatur abgekühlt, die unterhalb einer die Expansion der expandierenden Substanz auslösende Starttemperatur liegt.

Zur Vergrößerung der Abkühlgeschwindigkeit kann der aus der Breitschlitzdüse austretende Schmelzefilm 1 in dem Bereich zwischen der Breitschlitzdüse und Kühlwalze noch zusätzlich durch Aufsprühen von Kühlflüssigkeit oder Anströmung eines Kühlluftstromes gekühlt werden. Es versteht sich, dass der Abstand zwischen der Breitschlitzdüse 2 und dem Eintritt in den von der Kühlwalze 5 und dem Glättband 7 begrenzenden Spalt 6 möglichst klein sollte.

Die Abzugsgeschwindigkeit des Schmelzefilms 1 ist durch Einstellung der Drehzahl der Kühlwalze 5 veränderbar und wird gesteuert oder geregelt. Dabei wird eine Abzugsgeschwindigkeit eingestellt, die größer ist als die Austrittsgeschwindigkeit des Schmelzefilms 1 am Austritt der Breitschlitzdüse 2, um den Schmelzefilm 1 zu dehnen. Durch die erhöhte Abzugsgeschwindigkeit wird der Schmelzefilm dünner und wird dann in den Spalt 6 zwischen der Kühlwalze 5 und dem Glättband 7 eingeführt. Der Spaltabstand zwischen dem Glättband 7 und der Kühlwalze 5 wird so eingestellt, dass die am Ende des Spaltes 6 abgezogene, gekühlte Folie 9 die gewünschte Foliendicke aufweist. Der Abstandsspalt zwischen dem Umfang der Kühlwalze 5 und dem Glättband 7 ist in Umfangsrichtung nicht konstant, sondern verringert sich in Abzugsrichtung, wobei sich zumeist etwa auf halber Länge des zur Kühlwalze benachbarten Glättbandabschnittes ein minimaler Spaltabstand einstellt und der Spaltabstand danach in Abzugsrichtung wieder größter werden kann. Die Dicke der am Ende des Spaltes 6 abgezogenen Folie 9 entspricht im Wesentlichen dem minimalen Spaltabstand zwischen der Kühlwalze 5 und dem Glättband 7 beim entsprechenden Gegendruck des unter der Wirkung der expandierbaren Substanz expandierenden Polymerschmelzefilms.

Die expandierbare Substanz besteht aus Polymerkügelchen, die ein Treibgas entfalten und unter Atmosphärendruck bei einer Temperatur oberhalb von 80° C bis 190° C expandieren. Die expandierbare Substanz wird zusammen mit den für die Folienherstellung von Verpackungsfolien, Etikettenfolien und Dekorfolien üblichen Standardpolymeren wie beispielsweise Polyolefinen, Polyamiden oder thermoplastischen Elastomeren verarbeitet und zusammen mit den als Polymermatrix eingesetzten Polymeren extrudiert. Ferner können übliche Additive wie Farbpigmente, Gleitmittel oder Antiblockadditive eingesetzt werden.

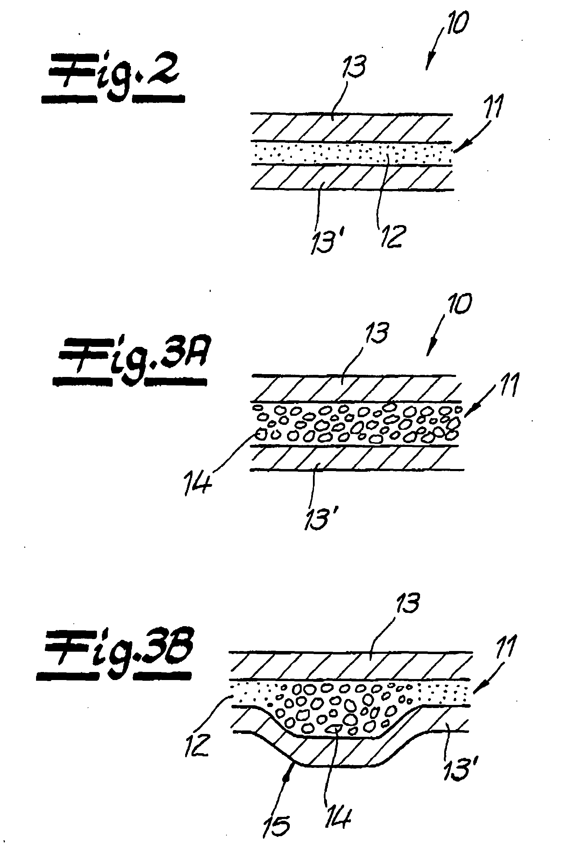

Die Fig. 2 zeigt den Schichtenaufbau einer mehrschichtigen, durch Coextrusion erzeugten Folie 10, die nach dem in Fig. 1 dargestellten Verfahren herstellbar ist. Sie weist eine Kemschicht 11 auf, welche die expandierende Substanz 12 enthält und durch Energiezufuhr aufgeschäumt werden kann. Die Energiezufuhr zur Veränderung der Foliendicke wird im Folgenden auch als thermische Aktivierung bezeichnet. Beidseits der expandierbaren Kemschicht 11 sind Deckschichten 13, 13' vorgesehen, die keine expandierbare Substanz 12 enthalten. Die in Fig. 2 dargestellte Folie 10 wird durch Coextrusion der Schichten 12, 13, 13' unter Verwendung einer Breitschlitzdüse hergestellt.

Die expandierfähige Kernschicht 11 weist vor einer thermischen Aktivierung der Folie eine Dicke zwischen 50 µm und 500 µm auf, wobei eine Schichtdicke zwischen 100 µm und 400 µm bevorzugt ist. Die Deckschichten 13, 13' besetzen eine Schichtdicke zwischen 20 µm und 80 µm.

Die Fig. 3a zeigt den Schichtenaufbau der Folie 10 nach einer thermischen Aktivierung durch eine ganzflächige Erhitzung der Folie bis zur Aufschäumtemperatur, z, B. durch eine Infrarotbeheizung. Durch Ausdehnung der expandierenden Substanz 12 bildet sich in der Kernschicht 11 eine Schaumstruktur 14, wobei die Gesamtdicke der Folie um mehr als 20 % angewachsen ist. Ohne Weiteres lassen sich Dickenänderungen um 100 bis 200 % erzielen.

In der Fig. 3b ist der Schichtenaufbau der Folie nach einer lokalen thermischen Aktivierung dargestellt. Durch lokale Energiezufuhr, z. B. durch Laserbestrahlung, durch Verwendung von Siegelwerkzeugen und dergleichen wird die expandierfähige Kernschicht 11 bereichsweise aufgeschäumt und wird hierdurch eine dreidimensionale Oberflächenstruktur erzeugt, wobei die aufgeschäumten Bereiche Erhebungen 15 bilden.

Für Folien, die nach dem erfindungsgemäßen Verfahren hergestellt worden sind, ergeben sich vielfältige Anwendungen. Mehrschichtige expandierbare Folien, insbesondere mit einem Schichtenaufbau gemäß Fig. 2, können beispielsweise als Verpackungsfolien verwendet werden, wobei durch partielles Aufschäumen der Folie dreidimensionale Oberflächenstrukturen erzeugt werden können oder durch Aufschäumen lokaler Bereiche Produktkennzeichnungen und Schriftzüge optisch hervorgehoben werden können. Ferner können durch eine thermische lokale Aktivierung einer expandierbaren Verpackungsfolie Strukturen erzeugt werden, weiche die Formstabilität der Verpackungsfolie verbessern, weil die Verpackungsfolie in den aktivierten Bereichen eine um 20 bis 30 % größere Foliendicke aufweist als in den nichtaktivierten Bereichen.

Schließlich kann das Aufreißverhalten einer Folienverpackung verbessert werden, wenn eine nach dem erfindungsgemäßen Verfahren hergestellte expandierbare Folie verwendet wird, die entlang einer Aufreißlinie durch eine Laserbestrahlung aktiviert wurde. Die Weiterreißfestigkeit wird durch das Aufschäumen herabgesetzt, so dass sich in oder am Rand der aufgeschäumten Linien ein Riss vorzugsweise ausbreiten wird.

Nach dem erfindungsgemäßen Verfahren können pigmentierte mehrschichtige Folien hergestellt werden, die durch eine thermische lokale Aktivierung sowohl die Oberflächenstruktur als auch in den aktivierten Bereichen ihre Farbe ändern. Eine solche Folie weist eine pigmentierte Unterschicht sowie eine die Unterschicht abdeckende aufschäumbare transparente Schicht auf. Im nichtaktivierten Zustand scheint die Farbe der Unterschicht durch. Durch eine lokale Aktivierung entstehen in der aufschäumbaren Schicht lokale Schaumstrukturen, die nicht mehr transparent sind und weiß bzw. opak erscheinen. Eine solche Folie ist vorzugsweise dreischichtig ausgebildet und weist eine pigmentierte Unterschicht, eine expandierbare Kemschicht sowie eine die Kemschicht abdeckende Oberschicht auf, wobei die Oberschicht sowie die Kemschicht nicht pigmentiert sind.

Nach dem efindungsgemäßen Verfahren können Klebeetiketten hergestellt werden. Durch partielle thermische Aktivierung und Laserbestrahlung können Kennzeichnungen und Schriftzüge in Blindenschrift (Brailleschrift) erzeugt werden. Nach dem erfindungsgemäßen Verfahren hergestellte Klebeetiketten weisen vorzugsweise einen mindestens dreischichtigen Aufbau auf, wobei die Kemschicht eine durch thermische Aktivierung expandierende Substanz enthält, und wobei eine bedruckbare außenseitige Deckschicht eine matte Oberfläche aufweist, um ein besseres Fingergleiten über die durch thermische Aktivierung erzeugte Brailleschrift zu ermöglichen. Die matte Folienoberfläche lässt sich durch Verwendung eines matten oder aufgerauten Glättbandes erzeugen.

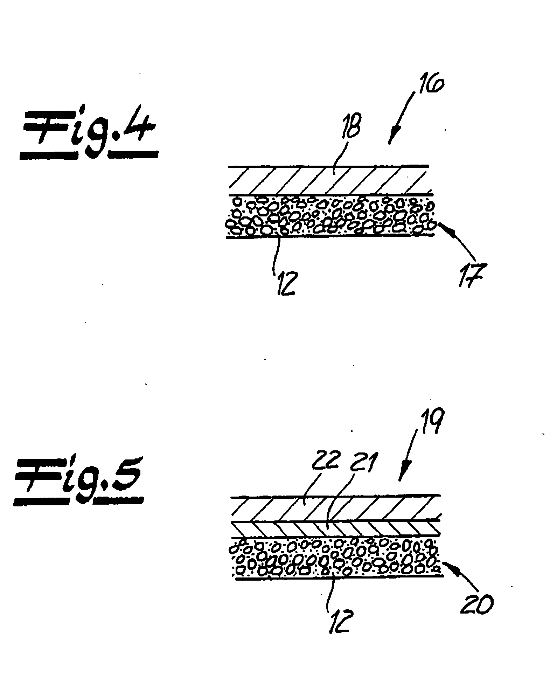

Nach dem erfindungsgemäßen Verfahren können auch Dekorfolien 16 insbesondere für den Automobilbereich hergestellt werden, die entsprechend der Darstellung in Fig. 4 eine unterseitige Schaumschicht 17 sowie eine die Schaumschicht 17 abdeckende Oberflächenschicht 18 aufweisen. Die Schaumschicht 17 enthält eine expandierbare Substanz 12, die sich durch Erhitzung unter Atmosphärendruck irreversibel ausdehnt Durch eine thermische Aktivierung kann die Schaumschicht nachgeschäumt werden. Bei der Kaschierung von Trägerteilen mit Dekorfolien, welche einen Schaumrücken besitzen, wird zuweilen ein Kollabieren des Schaumes beim Thermoformen, insbesondere an scharfkantigen Bauteilübergängen und kleinen Radien festgestellt. Durch die Möglichkeit eines nachträglichen Aufschäumens durch Wärmezugabe kann vermieden werden, dass entsprechende Zellstrukturen bei der Verformung der Folien, z. B. beim Thermoformen kollabieren. Das kann entweder dadurch erreicht werden, dass man in den entsprechenden Bereichen die notwenige Wärme zum Nachschäumen zuführt oder das man die Prozesswärme beim Kaschieren oder Thermoformen dafür nutzt und das Aufschäumen durch entsprechende Formwerkzeuge in Richtung Oberflächenschicht begrenzt.

Die Fähigkeit eines partiellen Schäumens durch gezielten Energieeintrag, z. B. durch Laserbestrahlung, bietet Möglichkeiten der Beschriftung, Folienschwächung für Airbagaustrittsöffnungen und dergleichen, da die Struktur im aufgeschäumten Bereich, insbesondere die Zähigkeit von Polyolefinen, herabgesetzt wird. Abschnittsweise lassen sich durch thermisches Aktivieren weiche, geschäumte Armauflagen, Griffe und dergleichen erzeugen.

In der Fig. 5 ist der Schichtenaufbau einer mehrschichtigen Dekorfolie 19 dargestellt, die ebenfalls nach dem erfindungsgemäßen Verfahren herstellbar und zum Aufkaschieren auf unregelmäßigen Substraten, insbesondere naturfaserverstärkten Trägerteilen, vorgesehen ist. Die Folie 19 weist eine expandierbare Unterschicht 10, eine Haftvermittlerschicht 21 sowie eine Oberflächendekorschicht 22 auf. Die Oberflächendekorschicht 22 kann glänzend oder matt mit einer feinen Strukturprägung ausgebildet sein. Auch durch eine Rohstoffauswahl der Außenschicht kann eine gewünschte Mattigkeit erzeugt oder verstärkt werden. Die expandierbare Unterschicht 20 enthält eine expandierbare Substanz 12, die sich durch thermische Aktivierung irreversibel ausdehnt.

Beim Aufkaschieren der Folie 19 auf einem naturfaserverstärkten Trägerteil unter Anwendung von Wärme und Druck passt sich die Folie 19 an Unebenheiten des Untergrundes an, so dass die Oberfläche des kaschierten Bauteils glatter ist.

## Patentansprüche

1. Verfahren zur Herstellung einer ein- oder mehrschichtigen expandierbaren Folie, deren Foliendicke durch Energiezufuhr lokal oder flächig veränderbar ist,
wobei durch Extrusion aus einer Polymerschmelze, die eine in der Polymerschmelze unter Atmosphärendruck expandierende Substanz enthält, ein Schmelzefilm (1) erzeugt wird, der aus einer Breitschlitzdüse (2) in eine unter Atmosphärendruck stehende Umgebung austritt, und
wobei der Schmelzefilm (1) in einen Spalt (6) zwischen zwei Oberflächen eingebracht und dort durch Kontaktkühlung an mindestens einer Oberfläche gekühlt wird,
**dadurch gekennzeichnet, dass** der aus der Breitschlitzdüse (2) austretende Schmelzefilm (1) zur Begrenzung einer am Austritt der Breitschlitzdüse (2) infolge einer Druckabsenkung einsetzenden Expansion der expandierenden Substanz in einen Spalt (6) zwischen einer rotierenden Kühlwalze (5) und einem am Umfang der Kühlwalze (7) angeordneten Glättband eingebracht und an einer gekühlten Mantelfläche (4) der Kühlwalze gekühlt wird, wobei der Schmelzefilm (1) innerhalb des Spaltes (6) auf eine Temperatur abgekühlt wird, die unterhalb einer die Expansion der expandierbaren Substanz auslösenden Starttemperatur liegt, und wobei die den Spalt (6) begrenzenden Oberflächen einer Expansion der Substanz ein Gegendruck entgegensetzen und diesen auf beiden Seiten des Schmelzefilms (1) so lange aufrechterhalten, bis der Schmelzefilm (1) durch Abkühlung der Polymerschmelze formstabil ist.

2. Verfahren nach Anspruch 1, **dadurch gekennzeichnet, dass** das Glättband (7) über Umlenkrollen (8) geführt und von einem Antrieb angetrieben wird, wobei es am Umfang der Kühlwalze (5) gleichsinnig zu dieser mit einer der Umfangsgeschwindigkeit der Kühlwalze (5) im Wesentlichen entsprechenden Geschwindigkeit umläuft.

3. Verfahren nach Anspruch 1 oder 2, **dadurch gekennzeichnet, dass** als Glättband (7) ein Metallband verwendet wird.

4. Verfahren nach einem der Ansprüche 1 bis 3, **dadurch gekennzeichnet, dass** der aus der Breitschlitzdüse (2) austretende Schmelzefilm (1) zusätzlich durch Kontakt mit einer Kühlflüssigkeit oder einem Kühlluftstrom gekühlt wird.

5. Verfahren nach einem der Ansprüche 1 bis 4, **dadurch gekennzeichnet, dass** der Schmelzefilm durch Einstellung einer Abzugsgeschwindigkeit, die größer ist als die Austrittsgeschwindigkeit des Schmelzefilms, am Austritt der Breitschlitzdüse (2) gedehnt und dadurch dessen Dicke reduziert wird.

6. Verfahren nach einem der Ansprüche 1 bis 5, **dadurch gekennzeichnet, dass** aus der Breitschlitzdüse (2) ein mehrschichtiger, durch Coextrusion erzeugter Schmelzefilm (1) austritt, wobei eine Schicht (11) des Schmelzefilms (1) aus einer die expandierende Substanz (12) enthaltenden Polymerschmelze gebildet wird.

7. Verfahren nach Anspruch 6, **dadurch gekennzeichnet, dass** der Schmelzefilm (1) mindestens drei Schichten (13, 13') aufweist, wobei die mittlere Schicht (11) eine expandierbare Substanz (12) enthält.

8. Verfahren nach Anspruch 6 oder 7, **dadurch gekennzeichnet, dass** die expandierfähige Schicht der Folie vor einer Aktivierung der Folie durch Energiezufuhr eine Dicke zwischen 10 µm und 500 µm, vorzugsweise eine Dicke zwischen 30 µm und 400 µm, aufweist.

9. Verfahren nach einem der Ansprüche 6 bis 8, **dadurch gekennzeichnet, dass** der aus der Breitschlitzdüse austretende Schmelzefilm auf einer oder beiden Seiten der expandierfähigen Schicht eine nicht expandierende Polymerschicht in einer Schichtdicke von 5 bis 200 µm aufweist.

## Claims

1. A method for producing a single- or multi-layer expandable film, of which the film thickness can be changed locally or over the entire surface by energy supply,
a melt film (1) which emerges from a flat film die (2) in an environment under atmospheric pressure being produced by extrusion from a polymer melt which contains a substance which expands in the polymer melt under atmospheric pressure, and
the melt film (1) being introduced into a gap (6) between two surfaces, where it is cooled over at least one face by contact cooling,
**characterised in that**, in order to limit an expansion of the expanding substance at the discharge of the flat form die (2) as a result of a reduction in pressure, the melt film (1) emerging from the flat form die (2) is introduced into a gap (6) between a rotating cooling roll (5) and a smoothing strip arranged over the periphery of the cooling roll (7) and is cooled on a cooled outer surface (4) of the cooling roll, the melt film (1) being cooled down inside the gap (6) to a temperature which lies below a start temperature which triggers the expansion of the expandable substance, and the surfaces, which define the gap (6), of an expansion of the substance opposing a counterpressure and being held against both sides of the melt film (1) until the melt film (1) is dimensionally stable owing to the cooling of the polymer melt.

2. The method according to claim 1, **characterised in that** the smoothing strip (7) is fed via return rollers (8) and is driven by a drive, said smoothing strip rotating on the periphery of the cooling roll (5) in the same direction as said roll and at a speed which corresponds substantially to the peripheral speed of the cooling roll (5).

3. The method according to either claim 1 or claim 2, **characterised in that** a metal strip is used as the smoothing strip (7).

4. The method according to any one of claims 1 to 3, **characterised in that** the melt film (1) emerging from the flat form die (2) is additionally cooled by contact with a cooling liquid or a cooling air flow.

5. The method according to any one of claims 1 to 4, **characterised in that** the melt film is expanded at the discharge of the flat form die (2) by adjusting a take-off speed, which is greater than the discharge speed of the melt film, and the thickness of said melt film is thus reduced.

6. The method according to any one of claims 1 to 5, **characterised in that** a multi-layer melt film (1) produced by coextrusion emerges from the flat form die (2), a layer (11) of the melt film (1) being formed from a polymer melt containing the expandable substance (12).

7. The method according to claim 6, **characterised in that** the melt film (1) comprises at least three layers (13, 13'), the middle layer (11) containing an expandable substance (12).

8. The method according to either claim 6 or claim 7, **characterised in that** the expandable layer or film is between 10 µm and 500 µm thick, preferably between 30 µm and 400 µm thick prior to activation of the film by energy supply.

9. The method according to any one of claims 6 to 8, **characterised in that** the melt film emerging from the flat form die comprises a non-expanding polymer layer on one or both sides of the expandable layer in a layer thickness of 5 to 200 µm.

## Revendications

1. Procédé de fabrication d'un film expansé à une ou à plusieurs couches, dont l'épaisseur de film est modifiable par apport d'énergie local ou en nappe,
par extrusion d'une masse fondue polymère qui contient une substance expansée dans la masse fondue polymère sous pression atmosphérique, un film de masse fondue (1) étant créé qui sort d'une filière plate (2) dans un environnement se trouvant sous pression atmosphérique et
le film de masse fondue (1) étant inséré dans un interstice (6) entre deux surfaces et y étant refroidi par refroidissement par contact d'au moins une surface,
**caractérisé en ce que**, pour limiter l'expansion de la substance en expansion s'établissant à la sortie de la filière plate (2) suite à une chute de pression, le film de masse fondue (1) sortant de la filière plate (2) est introduit dans un interstice (6) entre un tambour refroidisseur (5) en rotation et une bande de lissage placée sur la circonférence du tambour refroidisseur (7) et refroidi sur une surface d'enveloppe (4) refroidie du tambour refroidisseur, le film de masse fondue (1) étant refroidi à l'intérieur de l'interstice (6) à une température qui est inférieure à une température de démarrage déclenchant l'expansion de la substance expansible et les surfaces délimitant l'interstice (6) opposant à une expansion de la substance une pression antagoniste et maintenant cette dernière sur les deux faces du film de masse fondue (1) jusqu'à ce que le film de masse fondue (1) acquiert une stabilité de forme par refroidissement de la masse fondue polymère.

2. Procédé selon la revendication 1, **caractérisé en ce que** la bande lisseuse (7) est conduite par-dessus des poulies de renvoi (8) et est entraînée par un entraînement, alors que sur la circonférence du tambour refroidisseur (5), elle tourne dans le même sens que celui-ci, à une vitesse correspondant sensiblement à la vitesse périphérique du tambour refroidisseur (5).

3. Procédé selon la revendication 1 ou 2, **caractérisé en ce qu'**une bande métallique est utilisée en tant que bande lisseuse (7).

4. Procédé selon l'une quelconque des revendications 1 à 3, **caractérisé en ce que** le film de masse fondue (1) sortant de la filière plate (2) est refroidi en supplément par contact avec un liquide de refroidissement ou avec un courant d'air de refroidissement.

5. Procédé selon l'une quelconque des revendications 1 à 4, **caractérisé en ce que** le film de masse fondu est étiré par réglage d'une vitesse de tirage qui est supérieure à la vitesse de sortie du film de masse fondue à la sortie de la filière plate (2) et l'épaisseur de ce dernier se réduit de ce fait.

6. Procédé selon l'une quelconque des revendications 1 à 5, **caractérisé en ce qu'**il sort de la filière plat (2) un film de masse fondue multicouches, créé par extrusion (1), une couche (11) du film de matière fondue (1) étant créée à partir d'une masse fondue polymère contenant la substance expansible (12).

7. Procédé selon la revendication 6, **caractérisé en ce que** le film de matière fondue (1) comporte au moins trois couches (13, 13'), la couche centrale (11) contenant une substance expansible (12).

8. Procédé selon la revendication 6 ou 7, **caractérisé en ce qu'**avant une activation du film par apport d'énergie, la couche expansible du film présente une épaisseur comprise entre 10 µm et 500 µm, de préférence, une épaisseur comprise entre 30 µm et 400 µm.

9. Procédé selon l'une quelconque des revendications 6 à 8, **caractérisé en ce que** le film de masse fondue sortant de la filière plate présente sur une ou sur les deux faces de la couche expansible une couche polymère non soumise à expansion pas d'une épaisseur de couche de 5 à 200 µm.
